# EUROPÄISCHE PATENTSCHRIFT

(11) **EP 1 917 559 B1**
(45) Veröffentlichungstag und Bekanntmachung des Hinweises auf die Patenterteilung: **10.07.2013**
(21) Anmeldenummer: 06777041.2
(22) Anmeldetag: 23.08.2006
(51) Int. Cl.: G02F 1/17, G02F 1/19

(54) **TRANSMISSIONSGESTEUERTE FENSTERVERGLASUNG**
TRANSMISSION-CONTROLLED WINDOW GLAZING
VITRAGE DE FENETRE A TRANSMISSION COMMANDEE

(30) Priorität: 23.08.2005 DE 102005039838
(43) Veröffentlichungstag der Anmeldung: 07.05.2008
(73) Patentinhaber: Airbus Operations GmbH, 21129 Hamburg (DE)
(72) Erfinder: SCHERER, Thomas, 22559 Hamburg (DE)
(74) Vertreter: Kopf, Korbinian Paul
(86) Internationale Anmeldenummer: PCT/EP2006/008290
(87) Internationale Veröffentlichungsnummer: WO 2007/022972

(56) Entgegenhaltungen:
- WO-A-03/021344
- DE-A1- 4 440 572
- US-A1- 2003 169 476
- SALINGA C ET AL: "Gasochromic switching of tungsten oxide films: a correlation between film properties and coloration kinetics" PREPARATION AND CHARACTERIZATION, ELSEVIER SEQUOIA, NL, Bd. 414, Nr. 2, 22. Juli 2002 (2002-07-22), Seiten 288-295, XP004375015 ISSN: 0040-6090

## Beschreibung

Die Erfindung betrifft eine Fensterverglasung umfassend wenigstens zwei Scheiben mit einem belüfteten Zwischenraum, wobei wenigstens eine der Scheiben innenseitig mit einer Schicht versehen ist, deren Transmission steuerbar ist.

Eine innenbelüftete Verglasung für Flugzeuge ist aus der GB 640,554 bekannt geworden. Diese Verglasung besteht aus zwei Scheiben, die aus Glas oder Kunststoff bestehen und die beabstandet montiert sind. Der dadurch entstehende Zwischenraum wird mit getrockneter Luft gespült, so dass die Doppelscheibe unter allen im Betrieb auftretenden Temperaturbedingungen durchsichtig bleibt.

Aus der EP 0 338 876 B1 ist eine elektrochrome Verglasung mit variabler Lichtdurchlässigkeit bekannt geworden, die aus zwei Glasscheiben besteht, die innenseitig mit einer Schicht aus elektrochromen Material beschichtet sind. Die Verglasung weist jedoch keinen belüfteten Zwischenraum auf.

Elektrochrome Beschichtungen für Glasscheiben sind seit längerer Zeit bekannt. Beispielhaft sei hierfür die in der US 4,350,414 beschriebene Schicht auf einer Glasscheibe benannt. Weitere Hinweise zur Erzeugung einer Verglasung mit wenigstens zwei hinsichtlich der Transmission steuerbaren Scheiben sind jedoch nicht gegeben.

Aus der WO 03/021344 A1 ein System mit Verglasungselement und Gasversorgungsvorrichtung bekannt. Das Verglasungselement umfasst einen Zwischenraum mit einem Gas definierter Zusammensetzung und einer gasochromen Beschichtung. Die Gasversorgungsvorrichtung umfasst dabei eine Elektrolyseeinrichtung. Das Gas wird in einem geschlossenen Kreislauf zwischen Verglasungselement und Gasversorgungsvorrichtung geführt. Ferner sind in dem System Mittel zur Beeinflussung des Feuchtigkeitsgehaltes des Gases angeordnet.

Der Erfindung liegt die Aufgabe zugrunde, mit Hilfe einfacher Mittel die Erzeugung von Spülgas für den zwischen zwei Glasscheiben einer Verglasung befindlichen Zwischenraum dahingehend zu erweitern, dass eine für den Betrieb der steuerbaren Transmissionsschicht notwendige Zusammensetzung des Spülgases erreicht werden kann.

Diese Aufgabe wird in einfacher Weise dadurch gelöst, dass der Zwischenraum mit einer Zuleitung für Spülgas verbunden ist, die auch mit einem Mischgerät verbunden ist, mit dessen Hilfe die Zusammensetzung des Spülgases bedarfsgerecht einstellbar ist. Das Spülgas besteht dabei aus wenigstens zwei Komponenten.

Eine dieser Komponenten ist Luft, der Anteile von Wasserstoff oder Sauerstoff oder Anteile von Wasserstoff zusammen mit Sauerstoff beigemischt werden. Besonders vorteilhaft ist es dabei, dass die benötigten Anteile von Wasserstoff und Sauerstoff von einer Einrichtung erzeugt werden, die Bestandteil des Geräts ist, an der die Verglasung angebracht ist. Bei dem Gerät handelt es sich in der Regel um ein Fahrzeug oder ein Flugzeug, das an Bord eine eigene Einrichtung zur Sauerstofferzeugung mitführt.

Als dementsprechende Einrichtung zur Sauerstofferzeugung ist eine Elektrolytzelle besonders gut geeignet. Vorteilhafterweise ist hierbei die Abgabe wenigstens einer der beiden von der Elektrolytzelle erzeugten gasförmigen Komponenten Wasserstoff und Sauerstoff regelbar.

Besonders funktionell ist die Anordnung einer Vorrichtung zur Trocknung des Gasgemisches entweder in der Luftzuleitung zum Mischgerät oder in der Zuleitung zum Zwischenraum der Verglasung. Weiterhin ist es vorteilhaft, in der Luftzuleitung zum Mischgerät eine Regeleinrichtung für den Gasstrom einzubauen.

Als Alternativlösung bietet sich eine Anordnung zur Versorgung einer Vielzahl von gleichartigen Fensterverglasungen mit Spülgas an, bei der die Zuluft und ein weiteres Gas über getrennte Leitungen bis in den Bereich der jeweiligen Fensterverglasung geführtwerden. Dort ist eine Regeleinrichtung angeordnet, mit deren Hilfe sowohl das Mischungsverhältnis der beiden gasförmigen Komponenten des Spülgases als auch die Menge des in die jeweilige Fensterverglasung eingeleiteten Spülgases eingestellt werden kann. Die weitere Ausgestaltung dieser Bauform entspricht der oben bereits beschriebenen Ausgestaltung der ersten Bauform.

In besonderer Weise vorteilhaft ist die Verwendung einer vorhergehend beschriebenen Fensterverglasung in einem Flugzeug oder Fahrzeug.

Der besondere Vorteil der erfindungsgemäßen Einrichtung liegt darin, dass die im Betriebsfall notwendige Gasspülung des Zwischenraumes von Mehrfachverglasungen mit einfachen und in der Regel an Bord des Fahrzeuges bzw. Flugzeuges ohnehin schon vorhandenen Mitteln so durchgeführt werden kann, dass auch der zum Betrieb der steuerbaren Transmissionsänderung der Verglasung notwendige Wasserstoff auf einfache Weise bereitgestellt und dem Spülgas beigemischt werden kann. Entsprechende Mittel können auch mit vertretbarem Aufwand nachgerüstet werden.

Im Fall eines Flugzeugs bietet sich eine an Bord befindliche Anlage zur Sauerstofferzeugung an.

Vorteilhafterweise wird die Erzeugung des Wasserstoffes und / oder dessen Beimischung zum Spülgas mit Hilfe von Ventilen oder gleichwirkenden anderen Mitteln gesteuert. Zweckmäßigerweise ist an wenigstens einem der möglichen Einbauorte eine Einrichtung zur Trocknung des Spülgases oder der hierfür abgezweigten Kabinenluft vorgesehen. Vorteilhaft ist auch der Einbau einer Regeleinrichtung für den Gasstrom in der Zuleitung zum Mischgerät, in dem der Luftanteil des Spülgases mit dem Wasserstoffanteil und/oder dem Sauerstoffanteil gemischt wird.

Als besonders vorteilhaft wird die Verwendung der erfindungsgemäßen Fensterverglasung in einem Flugzeug oder Fahrzeug angesehen, weil hierdurch bei Verwendung von ohnehin an Bord vorhandenen Einrichtungen, insbesondere derjenigen zur Sauerstofferzeugung; eine wesentliche Gewichtseinsparung erzielt werden kann.

Bevorzugte Ausführungsbeispiele der Erfindung mit zusätzlichen Ausgestaltungsdetail sind in der Zeichnung schematisch vereinfacht dargestellt und werden nachfolgend unter Bezugnahme auf die Zeichnungen näher beschrieben. Es zeigen:
Fig. 1: eine Einrichtung zur Versorgung von Doppelverglasungen mit einem aus verschiedenen Komponenten bestehenden Spülgas,
Fig. 2: die Verwendung einer Elektrolytzelle in einer Einrichtung nach Fig. 1,
Fig. 3: die Regelung der der Einrichtung nach Fig. 1 zuführbaren Gasmenge, welche von einer Elektrolytzelle erzeugt wurde,
Fig. 4: eine Trocknungsvorrichtung in der Zuleitung des Luftanteils des Spülgases,
Fig. 5: eine Trocknungsvorrichtung in der Zuleitung des Wasserstoffanteils des Spülgases,
Fig. 6: die Anordnung einer zusätzlichen Regelungsanordnung in einer Einrichtung gemäß Fig. 1,
Fig. 7: eine weitere Einrichtung zur Versorgung von Doppelverglasungen mit einem aus zwei Komponenten bestehenden Spülgas.

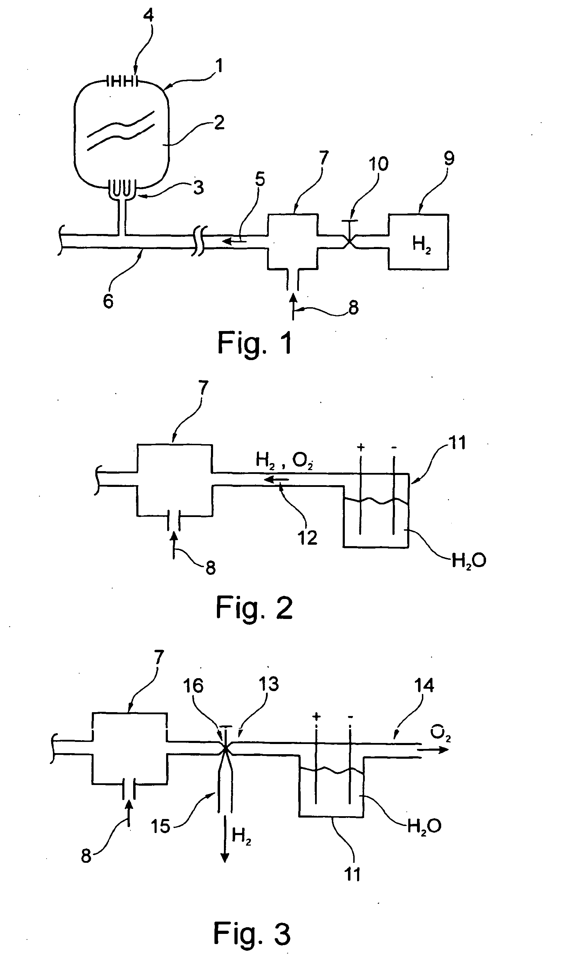

In der Fig. 1 ist vereinfacht ein Schnitt durch eine Fensterverglasung 1 dargestellt, die im Ausführungsbeispiel zwei Scheiben umfasst, welche einen Zwischenraum 2 einschließen. Es ist ebenso gut möglich, eine Mehrscheibenverglasung an dieser Stelle einzusetzen. Der Zwischenraum 2 weist weiterhin eine Anzahl von Öffnungen 3 für die Einleitung des Spülgases 5 auf. Üblicherweise werden auf der gegenüberliegenden Seite eine Anzahl von weiteren Öffnungen 4 für die Ableitung des Spülgases angeordnet, um eine gleichmäßige Durchströmung des Zwischenraumes zu erzielen.

Fensterverglasungen dieser Art werden in Fahrzeugen und Flugzeugen eingesetzt, die im Betrieb besonderen klimatischen Bedingungen unterworfen sind. Insbesondere bei Flugzeugen sind derartige Fensterverglasungen, die zwei oder mehrere Scheiben aufweisen, bekannt geworden. Die Scheiben einer derartigen Fensterverglasung können an den dem Zwischenraum 2 zugeordneten Seiten mit einer transparenten Beschichtung versehen sein, deren Transmissionsgrad sich durch Änderung elektrischer bzw. elektrochemischer Parameter verändern lässt. Insbesondere sind Beschichtungen bekannt, deren Transmission sich in Abhängigkeit vom Wasserstoffgehalt der die Beschichtung tangierenden Atmosphäre ändert.

Im Fall einer Doppelscheibe mit belüftetem Zwischenraum 2 bedeutet dies, dass das Spülgas 5 für den Zwischenraum 2 einen einstellbaren Gehalt an Wasserstoff aufweisen muss.

In der Regel wird ein Anteil der aufbereiteten Zuluft 8 als Basis für das Spülgas 5 verwendet, das über ein Leitungssystem 6 mit den Öffnungen 3 für die Zuleitung des Spülgases in den Zwischenraum 2 verbunden ist.

Das Leitungssystem 6 ist eingangsseitig mit einem Mischgerät 7 verbunden. Das Mischgerät weist seinerseits zwei Eingange auf, einen für die Zuluft 8 und einen weiteren für das beizumischende Gas (H₂) wie beispielsweise Wasserstoff. Zweckmäßigerweise ist letzterer über eine Regeleinrichtung 10 mit dem das Gas erzeugenden Gerät 9 verbunden. Die Regeleinrichtung 10 ermöglicht die dosierte Zumischung des Wasserstoffgases in Abhängigkeit von der Menge der in das Mischgerät 7 geleiteten Zuluft 8. Das Leitungssystem 6 dient darüber hinaus auch zur Versorgung weiterer Gleichartiger Fensterverglasung mit dem gleichen Spülgas 5.

Als Wasserstoffgas erzeugende Geräte sind verschiedene Bauformen bekannt geworden. An Bord eines Flugzeuges bietet sich hierfür beispielsweise das ohnehin vorhandene System zur Erzeugung von Sauerstoff für die Kabinenluft ( genannt OBOGS: on board oxygen generating system) an. Hierbei fällt Wasserstoffgas gleichsam als Abfallprodukt der Sauerstofferzeugung an. Es können hierfür aber ebenso andere Sauerstoffsysteme für die Kabinenluft eingesetzt werden, da OBOGS nur ein optionales System ist.

Eine spezielle Möglichkeit zur Erzeugung von Wasserstoffgas ist die Verwendung einer Elektrolytzelle 11, die in Fig. 2 dargestellt ist. Hierbei werden im einfachsten Fall die mittels Elektrolyse von Wasser (H₂0) erzeugten Gase Wasserstoff und Sauerstoff über eine gemeinsame Leitung 12 zum Mischgerät 7 geführt und dort mit der Zuluft 8 vermischt. Der Luftstrom der Zuluft 8 wird in der Regel konstant gehalten, kann aber auch den Bedürfnissen entsprechend angepasst werden.

Die Fig. 3 zeigt eine vorteilhafte Lösung unter Verwendung einer Elektrolytzelle 11 mit zwei wegführenden Leitungen 13, 14 für die separiert erzeugten Gasströme Wasserstoff und Sauerstoff. Während der Sauerstoffanteil über die Leitung 14 einer anderen, hier nicht näher beschriebenen Verwendung zugeführt wird, fließt der erzeugte Wasserstoffgasanteil über die Leitung 13 zu einem Ventil 16. Dieses ist im Ausführungsbeispiel als 3-Wege-Ventil ausgeführt. Es ermöglicht eine Feindosierung der dem Mischgerät zugeführten Wasserstoffgasmenge. Die überschiessende Restmenge des Wasserstoffgases wird über eine weitere Leitung 15 einer anderen Verwendung zugeführt oder abgeblasen. Die Vermischung von der Zuluft 8 und der dosierten Menge des Wasserstoffgases erfolgt in gleicher Weise wie bei dem in Fig. 2 dargestellten Ausführungsbeispiel.

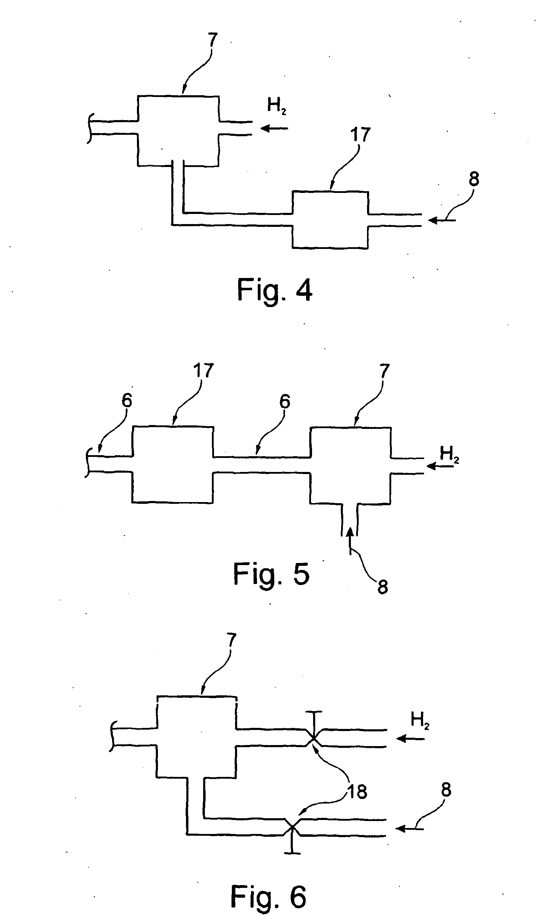

In der Fig. 4 ist zusätzlich zur bisher beschriebenen Aufbereitung des Spülgases noch eine nützliche Ergänzung dargestellt. Da in der Regel davon auszugehen ist, dass die Zuluft 8 über einen nicht unerheblichen Gehalt an Wasserdampf verfügt, ist es angebracht, in der Leitung, welche die Zuluft 8 zum Mischgerät 7 führt, eine Vorrichtung 17 zur Trocknung der Zuluft 8 einzusetzen. Damit lässt sich der Wassereintrag in den Zwischenraum 2 der Fensterverglasung erheblich reduzieren.

Alternativ kann die Vorrichtung 17 zur Trocknung des Gasgemisches auch in dem Leitungszug vom Mischgerät 7 zum Zwischenraum 2 eingesetzt werden. Dies ist in der Fig. 5 vereinfacht dargestellt.

Eine weitere vorteilhafte Ausgestaltung der Erfindung ist in der Fig. 6 dargestellt. Dies betrifft die Anordnung von Regeleinrichtungen 18 in wenigstens einer der Gas- / Luftzuleitungen H₂, 8 zum Mischgerät 7. Damit kann die Menge des Spülgases für die Fensterverglasung und auch dessen anteilige Zusammensetzung aus Luft und beigemischten Gasen sehr genau dosiert werden. Dies ist besonders zur wirksamen Begrenzung der Verschmutzung und des Kondenswassereintrags in den Zwischenraum 2 der Fensterverglasung von entscheidender Bedeutung.

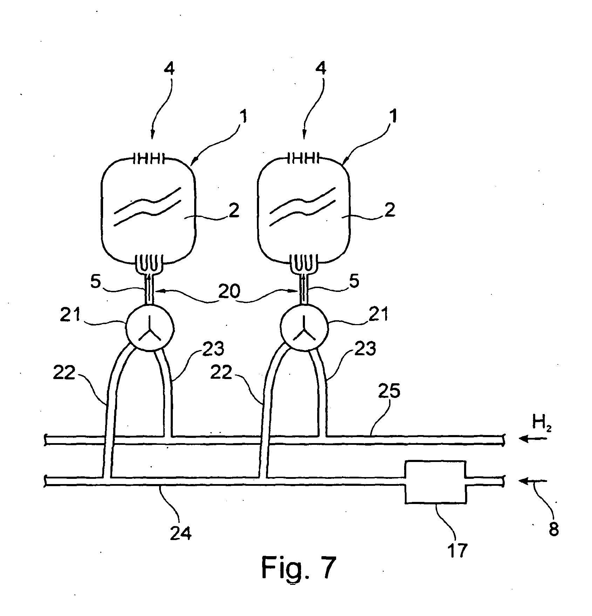

Die Fig. 7 zeigt schließlich eine alternative Lösung zu der in Fig. 1 dargestellten Bauform. Die Anordnung zeigt hier zwei Fensterverglasungen 1, wobei diese nur beispielhaft für eine Vielzahl gleichartiger Fensterverglasungen wiedergegeben sind. Das fertig gemischte und dosierte Spülgas 5 wird jedem der Zwischenräume 2 dcr Fensterverglasung 1 über Leitungen 20 zugeführt. Diese Leitungen 20 sind jeweils mit den Ausgängen einer Regeleinrichtung 21 verbunden. Die separierten Eingänge der Regeleinrichtung 21 sind jeweils mit Speiseleitungen 24, 25 für die Zuluft 8 und die zweite gasförmige Komponente des Spülgases - hier Wasserstoff H₂ - verbunden. In der Speiseleitung 24 der Zuluft 8 kann bedarfsweise auch eine Vorrichtung zur Trocknung der Zuluft eingefügt sein.

## Patentansprüche

1. Flugzeug oder Fahrzeug, aufweisend
ein System (9) zur Erzeugung von Sauerstoff für die Kabinenluft, sowie eine Fensterverglasung umfassend wenigstens zwei Scheiben mit einem belüfteten Zwischenraum, wobei wenigstens eine der Scheiben innenseitig mit einer Schicht versehen ist, deren Transmission in Abhängigkeit von der Zusammensetzung eines Spülgases steuerbar ist, wobei
der Zwischenraum (2) mit einem Leitungssystem (6) zur Zuleitung des Spülgases (5)
verbunden ist, wobei
das Leitungssystem (6) mit einem Mischgerät (7) verbunden ist, mit dessen Hilfe die
Zusammensetzung des Spülgases (5) bedarfsgerecht einstellbar ist,
wobei das Mischgerät (7) zwei separate Eingänge für die Komponenten des Spülgases (5) aufweist,
wobei das Mischgerät (7) ausgestaltet ist, die Zusammensetzung des Spülgases (5) aus wenigstens zwei Komponenten einzustellen;
wobei das Spülgas (5) aus einer Mischung von Wasserstoff und Luft und/oder Sauerstoff besteht; **dadurch gekennzeichnet, dass**
der benötigte Wasserstoff von dem System (9) zur Erzeugung von Sauerstoff erzeugt wird.

2. Flugzeug oder Fahrzeug nach Anspruch 1, **dadurch gekennzeichnet, dass** das Mischgerät (7) in wenigstens einer Gaszuleitung (13) ein steuerbares Ventil (16) aufweist.

3. Flugzeug oder Fahrzeug nach einem der vorhergehenden Ansprüche,
wobei ein Eingang des Mischgeräts (7) mit einer Luftzuleitung (8) verbunden ist;
**dadurch gekennzeichnet, dass** in der Luftzuleitung (8) zum Mischgerät (7) oder im Leitungssystem (6) zur Fensterverglasung eine Vorrichtung (17) zur Trocknung des Gasgemisches und/oder der Luft angeordnet ist.

4. Flugzeug oder Fahrzeug nach einem der vorhergehenden Ansprüche, **dadurch gekennzeichnet, dass** in einer Luftzuleitung (8) und/oder einer Wasserstoffzuleitung (H₂), die mit einem der Eingänge des Mischgeräts (7) verbunden sind, eine Regeleinrichtung (18) für den Gasstrom angeordnet ist.

## Claims

1. Aircraft or vehicle, comprising
a system (9) for generating oxygen for cabin air, and
a window glazing comprising at least two panes with a ventilated gap, wherein an inside of at least one of the panes is provided with a layer whose transmission is controllable depending on a composition of a flushing gas , wherein the gap (2) is connected with a line system (6) for feeding a flushing gas (5),
wherein the line (6) is connected with a mixing device (7) with the help of which the composition of the flushing gas (5) is adjustable as needed, wherein the mixing device (7) comprises two separate inputs for the components of the flushing gas (5),
wherein the mixing device (7) is adapted for adjusting the composition of the flushing gas (5) from at least two components;
wherein the flushing gas (5) consists of a mixture of hydrogen and air and/or oxygen; **characterized in that**
the required hydrogen is generated by the system (9) for generating oxygen.

2. Aircraft or vehicle according to claim 1, **characterized in that** the mixing device (7) comprises a controllable valve (16) in at least one gas feeding line (13).

3. Aircraft or vehicle according to any of the preceding claims,
wherein an inlet of the mixing device (7) is connected to an air feeding line (8); **characterized in that**
in the air feeding line (8) to the mixing device (7) or in the line system (6) to the window glazing a device (17) for drying the gas mixture and/or the air is arranged.

4. Aircraft or vehicle according to any of the preceding claims, **characterized in that** in the air feeding line (8) and/or in a hydrogen feeding line (H2), which is connected to one of the inlets of the mixing device (7), a control device (18) for the gas stream is arranged.

## Revendications

1. Avion ou véhicule, comportant :
- un système (9) de production d'oxygène pour l'air de la cabine ainsi que
- un vitrage de fenêtre comprenant au moins deux vitres avec un espace intermédiaire ventilé, au moins l'une des vitres étant munie sur la face intérieure d'une couche dont la transmission peut être commandée en fonction de la composition d'un gaz de lavage, l'espace intermédiaire (2) étant relié à un système de conduite (6) destiné à alimenter le gaz de lavage (5),
le système de conduite (6) étant relié à un mélangeur (7) qui permet de régler la composition du gaz de lavage (5) selon les besoins,
le mélangeur (7) présentant deux entrées séparées pour les composantes du gaz de lavage (5),
le mélangeur (7) étant configuré pour régler la composition du gaz de lavage (5) à partir d'au moins deux composantes,
le gaz de lavage (5) étant composé d'un mélange d'hydrogène et d'air et/ou d'oxygène,
**caractérisé en ce que** l'hydrogène nécessaire est généré par le système (9) de production d'oxygène

2. Avion ou véhicule selon la revendication 1, **caractérisé en ce que** le mélangeur (7) présente une soupape valve (16) dans au moins une alimentation en gaz (13).

3. Avion ou véhicule selon l'une des revendications précédentes,
une entrée du mélangeur (7) étant reliée à une alimentation en air (8);
**caractérisé en ce qu'**un dispositif (17) de séchage du mélange gazeux et/ou de l'air est disposé dans l'alimentation en air (8) en direction du mélangeur (7) ou dans le système de conduite (6) en direction du vitrage de fenêtre.

4. Avion ou véhicule selon l'une des revendications précédentes, **caractérisé en ce qu'**un système de régulation (18) du flux gazeux est disposé dans une alimentation en air (8) et/ou une alimentation en hydrogène (H2), lesquelles sont reliées à l'une des entrées du mélangeur (7).
